# FASCICULE DE BREVET EUROPEEN

(11) **EP 3 411 213 B1**
(45) Date de publication et mention de la délivrance du brevet: **01.09.2021**
(21) Numéro de dépôt: 17707612.2
(22) Date de dépôt: 01.02.2017
(51) Int. Cl.: B29C 48/88, B60K 11/08

(54) **PROCÉDÉ DE FABRICATION DE VOLET DE DISPOSITIF D'OBTURATION DE FACE AVANT ET VOLET DE DISPOSITIF D'OBTURATION D'UNE ENTRÉE D'AIR DE FACE AVANT**
VERFAHREN ZUR HERSTELLUNG EINER KLAPPE EINER VORRICHTUNG ZUM ABDICHTEN EINER FRONT UND KLAPPE EINER VORRICHTUNG ZUM ABDICHTEN EINES FRONTLUFTEINLASSES
METHOD FOR PRODUCING A FLAP OF A DEVICE FOR SEALING A FRONT END AND FLAP OF A DEVICE FOR SEALING A FRONT END AIR INTAKE

(30) Priorité: 03.02.2016 FR 1650845
(43) Date de publication de la demande: 12.12.2018
(73) Titulaire: Valeo Systemes Thermiques-THS, 78322 Le Mesnil Saint Denis Cedex (FR)
(72) Inventeur: HERLEM, Jean-Paul, 78180 Montigny Le Bretonneux (FR)
(74) Mandataire: Tran, Chi-Hai
(86) Numéro de dépôt international: PCT/FR2017/050221
(87) Numéro de publication internationale: WO 2017/134384

(56) Documents cités:
- WO-A1-02/097277
- WO-A1-2011/009212
- WO-A1-2014/001430
- US-A1- 2012 118 656

## Description

La présente invention concerne les dispositifs d'obturation et plus précisément un procédé de fabrication de volet d'un dispositif d'obturation d'entrée d'air de face avant de véhicule automobile ainsi qu'un volet de dispositif d'obturation d'une entrée d'air de face avant obtenu par un tel procédé.

Les faces avant de véhicules automobiles sont généralement composées de deux entrées d'air principales dites voie haute et voie basse, séparées par une poutre pare-choc. Derrière cette poutre pare-choc sont généralement placés les échangeurs de chaleur du véhicule automobile, comme par exemple celui utilisé pour la climatisation de l'habitacle et/ou encore celui utilisé pour le refroidissement du moteur.

Il est également connu de disposer, dans le trajet d'air passant par les entrées d'air principales, plus généralement la voie basse, un cadre support comportant une multiplicité de volets montés pivotants autour d'axes parallèles et propres à prendre une multiplicité de positions angulaires différentes, comprises entre une position d'ouverture et une position d'obturation, sous l'action de moyens de commande appropriés. Le document WO 2011/009212 A1 divulgue un procédé de fabrication d'un volet pour dispositif d'obturation de véhicule automobile, ledit procédé comportant les étapes suivantes: extrusion d'un profilé creux formée d'une peau externe réalisée dans une première matière, découpe du profilé creux à une longueur (L) prédéterminée de sorte à former un corps de volet, mise en place d'embouts aux extrémités du corps de volet.

On obtient ainsi un dispositif d'obturation s'apparentant à une jalousie qui permet d'ajuster le débit d'air traversant les entrées d'airs et arrivant aux échangeurs de chaleur. Il est ainsi possible d'optimiser l'efficacité de ces échangeurs de chaleur en fonction des besoins et faisant varier la quantité d'air qu'ils reçoivent. De plus, à grande vitesse, les volets en position d'obturation permettent de diminuer le coefficient de traînée du véhicule et ainsi améliorent l'aérodynamisme dudit véhicule.

Les volets de tels dispositifs d'obturation sont généralement moulés. Le procédé de fabrication par moulage des volets ne permet pas une grande flexibilité de fabrication car afin de changer de types ou de dimensions de volets, il est nécessaire de changer complètement le moule ce qui implique des coûts importants.

Un des buts de la présente invention est donc de remédier au moins partiellement aux inconvénients de l'art antérieur en proposant un procédé de fabrication d'un volet amélioré.

La présente invention concerne donc un procédé de fabrication d'un volet pour dispositif d'obturation de véhicule automobile, ledit procédé comportant les étapes suivantes :
∘ extrusion d'un profilé creux formée d'une peau externe réalisée dans une première matière,
∘ découpe du profilé creux à une longueur prédéterminée de sorte à former un corps de volet,
∘ mise en place d'embouts aux extrémités du corps de volet.

Le fait que le profilé creux donnant le corps de volet soit réalisé par extrusion permet de réaliser des peaux externes plus fines que lors d'un procédé de fabrication par moulage. Les peaux externes étant plus fines, le volet sera alors plus léger. De plus, du fait que le profilé creux donnant le corps de volet soit réalisé par extrusion, ledit procédé de fabrication est plus économique et flexible que par moulage. En effet, si l'on désire changer la longueur des volets, il n'est pas nécessaire de changer un moule, il suffit simplement de modifier la longueur de découpe du profilé creux. Et si l'on désire changer la structure du corps de volet, que ce soit au niveau de sa forme ou de sa largeur, il suffit de changer la filière de l'extrudeuse ce qui est bien moins onéreux qu'un moule complet.

Selon un aspect de l'invention, lors de l'étape d'extrusion du profilé creux, au moins une entretoise est formée dans le creux dudit profilé.

Selon un autre aspect de l'invention, le procédé de fabrication comporte une étape supplémentaire de mise en place d'un joint d'étanchéité sur au moins une des arêtes du corps de volet.

Selon un autre aspect de l'invention, l'étape d'extrusion est une coextrusion entre la première matière destinée à former le profilé creux et une deuxième matière destinée à former un joint d'étanchéité sur au moins une des arêtes du profilé creux.

Selon un autre aspect de l'invention, le profilé creux a une section transversale de profil sensiblement ovale.

Selon un autre aspect de l'invention, la première matière est une matière métallique.

Selon un autre aspect de l'invention, l'épaisseur de la peau externe du corps de volet est comprise entre 0,1 et 0,5 mm, de préférence entre 0,2 et 0,3 mm.

Selon un autre aspect de l'invention, la première matière est un polymère thermoplastique.

Selon un autre aspect de l'invention, l'épaisseur de la peau externe du corps de volet est comprise entre 0,5 et 1 mm, de préférence entre 0,7 et 0,9 mm.

L'invention concerne également un volet de dispositif d'obturation d'une entrée d'air de face avant obtenu par un tel procédé. Le volet selon l'invention comprend un corps avec une peau externe, la peau externe comprenant un profilé creux, et deux embouts agencés aux extrémités du corps de volet, chaque embout étant agencé pour boucher uniquement un seul profilé creux correspondant. En d'autres termes, chaque extrémité du volet ne comprend qu'un seul embout, de ce fait, chaque embout ne recouvre, ou bouche, ou obture, qu'une seule et unique extrémité du volet, le volet étant de profilé, ou section, creuse.

Un tel volet sera donc plus léger que ceux de l'art antérieur tout en présentant une résistance mécanique satisfaisante.

Selon un aspect de l'invention, les embouts sont de forme différente.

Selon un autre aspect de l'invention, le corps de volet comporte au moins une entretoise reliant deux portions opposées de peau externe.

Selon un autre aspect de l'invention, au moins un embout comporte un doigt s'étendant selon l'axe de pivotement, apte à coopérer avec un palier porté par un cadre support.

D'autres caractéristiques et avantages de l'invention apparaîtront plus clairement à la lecture de la description suivante, donnée à titre d'exemple illustratif et non limitatif, et des dessins annexés parmi lesquels :
- la figure 1 montre une représentation schématique en perspective de face d'un dispositif d'obturation en position d'obturation,
- la figure 2 montre une représentation schématique en perspective d'un élément de commande,
- la figure 3 montre une représentation schématique en perspective éclatée d'un volet,
- la figure 4 montre une représentation schématique d'une section transversale d'un corps de volet,
- la figure 5 montre un organigramme des étapes du procédé de fabrication d'un volet.

Les éléments identiques sur les différentes figures, portent les mêmes références.

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées ou interchangées pour fournir d'autres réalisations.

Dans la présente description on peut indexer certains éléments ou paramètres, comme par exemple premier élément ou deuxième élément ainsi que premier paramètre et deuxième paramètre ou encore premier critère et deuxième critère etc. Dans ce cas, il s'agit d'un simple indexage pour différencier et dénommer des éléments ou paramètres ou critères proches mais non identiques. Cette indexation n'implique pas une priorité d'un élément, paramètre ou critère par rapport à un autre et on peut aisément interchanger de telles dénominations sans sortir du cadre de la présente description. Cette indexation n'implique pas non plus un ordre dans le temps par exemple pour apprécier tels ou tels critères.

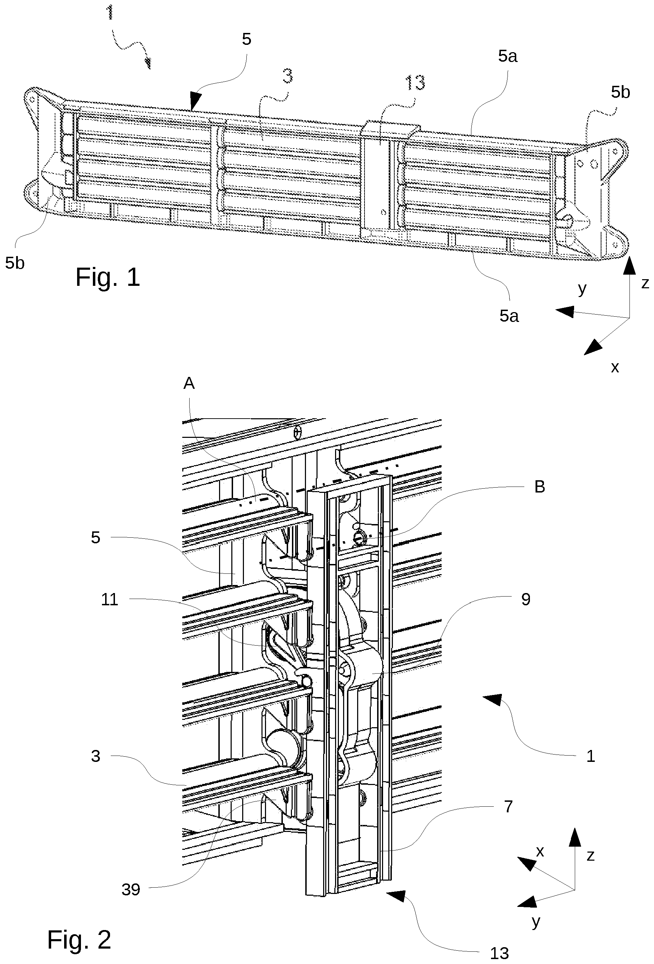

Sur les figures 1 et 2, nous utiliserons un trièdre XYZ afin de montrer l'angle de vue de chacune desdites figures les unes par rapport aux autres. Les axes de ce trièdre peuvent également correspondre aux différentes orientations du véhicule automobile. L'axe X peut ainsi correspondre à l'axe de la longueur du véhicule, l'axe Y à l'axe de sa largeur et l'axe Z à celui de sa hauteur.

La figure 1 montre une représentation schématique en perspective d'un dispositif d'obturation en position d'obturation. Cette figure 1 montre plus exactement la face externe dudit dispositif d'obturation 1, c'est-à-dire la face dirigée vers l'extérieur du véhicule automobile.

Ledit dispositif d'obturation 1 comporte un cadre support 5 comprenant notamment deux traverses longitudinales 5a, s'étendant parallèlement à l'axe Y du trièdre, et au moins deux montants latéraux 5b, s'étendant parallèlement à l'axe Z du trièdre, et reliant lesdites traverses traverses longitudinales 5a. Avantageusement, le cadre support 5 est réalisé en matière plastique et les deux traverses longitudinales 5a et les au moins deux montants latéraux 5b sont obtenus par moulage par injection. Afin d'améliorer la rigidité dudit cadre support 5, ce dernier peut être moulé en une seule pièce.

Au sein dudit cadre support 5 est installé le ou les volets 3. Lorsqu'il y a une pluralité de volets 3, ces derniers forment des rangs de volets 3 parallèles entre eux et qui forment un ensemble de volets 3. A l'une des extrémités du volet 3 ou de l'ensemble de volets 3, est placé un élément de commande 13 permettant la rotation du ou des volets 3 autour d'un axe de pivotement A, entre une position d'ouverture (non représentée), où le ou les volets 3 sont disposés de sorte qu'un flux d'air puisse traverser le dispositif d'obturation 1, notamment à l'intérieur du cadre support 5, et une position d'obturation illustrée à la figure 1, où le ou les volets 3 sont agencés de sorte qu'un flux d'air ne puisse pas traverser le dispositif d'obturation 1.

Comme illustré sur la figure 1, il est possible d'avoir un dispositif d'obturation 1 d'une entrée d'air de face avant de véhicule automobile comportant plusieurs ensembles de volets 3 s'étendant sur toute la largeur du cadre support 5. Les ensembles de volets 3 peuvent être séparés par l'élément de commande 13 afin d'assurer leur rotation synchrone.

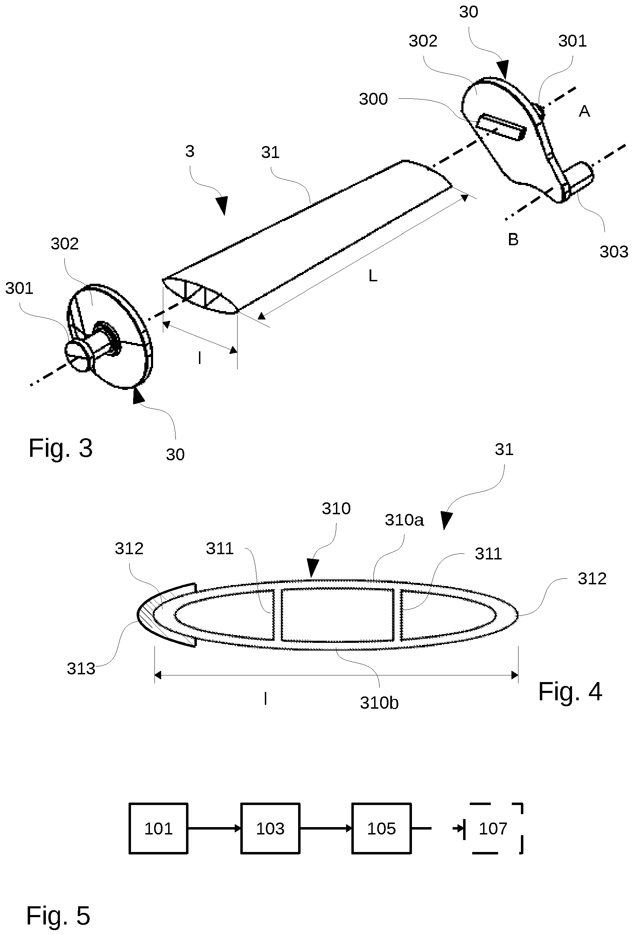

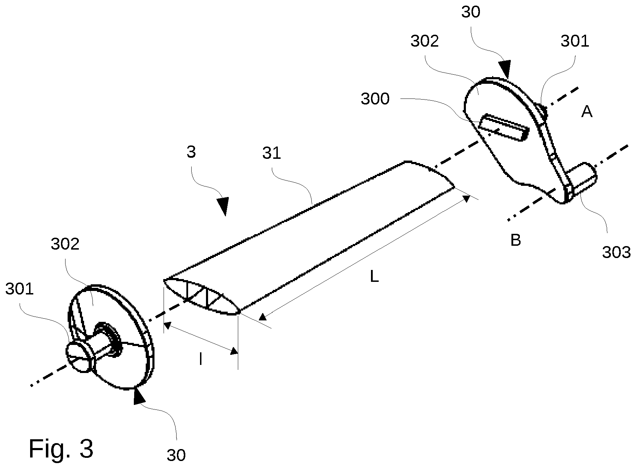

Comme le montre la figure 2, l'élément de commande 13 comporte notamment une bielle 7. Le ou les volets 3 comportent un bras de commande 39, perpendiculaire à leur axe de pivotement A et portant un goujon de liaison 303 (visible sur la figure 3) selon un axe de liaison B. Le goujon de liaison 303 permet la liaison entre le volet 3 et la bielle 7 L'axe de pivotement A et les axes de liaison B sont non confondus et tous deux parallèles à l'axe Y du trièdre. Ledit bras de commande 39 vient généralement de matière avec lesdits volets 3.

L'élément de commande 13 comporte également un actionneur 9. L'actionneur 9 peut être électrique, comme par exemple un moteur électrique ou encore pneumatique, comme par exemple un vérin pneumatique. Ledit actionneur 9 applique à la bielle 7 un mouvement de translation selon l'axe Z du trièdre, par pivotement d'un levier 11

Les volets 3 peuvent pivoter chacun autour d'un axe de pivotement A défini par leur liaison avec le cadre support 5. Les goujons liaison 303 entre les volets 3 et la bielle 7 de commande sont excentrés par rapport aux axes de pivotement A de sorte qu'un mouvement de translation parallèlement à l'axe Z du trièdre de la bielle 7 de commande, sous l'action de l'actionneur 9, entraîne le pivotement des volets 3 autour de leurs axes de pivotement A respectifs et donc le passage desdits volets 3 d'une position à une autre.

Tous les volets 3 étant reliés à la même bielle 7, le passage d'une position d'ouverture à une position d'obturation est synchrone pour tous lesdits volets 3. Il est également possible que l'ensemble ne comporte qu'un seul volet 3.

Le volet selon l'invention comprend un corps de volet 31 avec une peau externe 310, ladite peau externe 310 comprenant un profilé creux, et un embout 30 agencé à chaque extrémité du corps de volet 31, chaque embout 30 étant agencé pour boucher uniquement un seul profilé creux correspondant.

Comme le montre la figure 3, un volet 3 peut comporter un corps de volet 31 allongé selon son axe de pivotement A et de longueur L. Le corps de volet 31 peut notamment avoir une section transversale de largeur 1. La section transversale du corps de volet 31 peut plus particulièrement avoir un profil sensiblement ovale. Il est néanmoins tout à fait possible d'imaginer d'autres formes pour le profil de la section transversale du corps de volet 31, comme par exemple rectangulaire ou encore avec une portion centrale creuse d'où partent des ailettes.

A chaque extrémité du corps de volet 31 sont disposés des embouts 30. Dans le cas présent, on parle des extrémités selon la direction longitudinale du corps de volet 31 Les embouts 30 comportent, sur une première face dirigée vers le corps de volet 31, des excroissances 300 faisant saillies parallèlement à l'axe de pivotement A afin d'être encastrées aux extrémités du corps de volet 31. Lesdits embouts 30 comportent également, sur une deuxième face opposée à la première face, un doigt 301 s'étendant selon l'axe de pivotement A du volet 3 et coopérant avec un palier porté par le cadre support 5. Les embouts 30 peuvent également comporter, au niveau de leur interface avec les extrémités du corps de volet 31, une collerette 302 s'étendant perpendiculairement à l'axe de pivotement A. Lesdites collerettes 302 permettent notamment de protéger le cadre support 5 et l'élément de commande 13 de l'eau ou de la poussière qui pourrait arriver au niveau du corps de volet 31.

Au moins un des embouts 30 comporte également sur sa deuxième face, le goujon de liaison 303 s'étendant selon l'axe de liaison B, de sorte à former le bras de commande 39 et permettre la liaison du volet 3 avec la bielle 7.

Les embouts 30 sont de préférences réalisés en matière plastique par moulage par injection. Lesdits embouts 30, agencés aux deux extrémités du corps de volet 31, peuvent être de forme différente comme illustré sur la figure 3 ou bien être de forme identique, ce qui permet d'économiser sur les coûts de production.

La figure 4 montre une section transversale d'un corps de volet 31. Le corps de volet 31 comporte une peau externe 310 délimitant un creux. La peau externe 310 est réalisée par extrusion de la première matière. Cette première matière peut par exemple être une matière métallique et permettre que ladite peau externe 310 ait une épaisseur comprise entre 0,1 et 0,5 mm, de préférence entre 0,2 et 0,3 mm. La première matière peut également être un polymère thermoplastique et permettre que ladite peau externe 310 ait une épaisseur comprise entre 0,5 et 1 mm, de préférence entre 0,7 et 0,9 mm. Ces épaisseurs de peau externe 310 sont inférieures à celles de volets 3 réalisés par moulage.

Au sein de son creux, le corps de volet 31 peut également comporter au moins une entretoise 311 reliant deux portions 310a et 310b opposées de peau externe 310 de la section transversale. Ces entretoises 311 permettent au corps de volet 31 de garder sa rigidité quelle que soit sa longueur L et ce tout en conservant sa légèreté. Le nombre de ces entretoises 311 est dépendant de la largeur 1 du corps de volet 31. Plus la largueur 1 est grande, plus le nombre d'entretoise 311 peut être grand. Les entretoises 311 sont formées en même temps que la peau externe 310 par extrusion et viennent de matière avec cette dernière.

Le corps de volet 31 peut également comporter sur au moins une de ses arêtes 312 un joint d'étanchéité 313 réalisé en une deuxième matière, notamment une matière élastique. Les arêtes 312 correspondent aux extrémités de la section transversale du corps de volet 31. Lesdites arêtes 312 s'étendent parallèlement à l'axe de pivotement A. Cette deuxième matière peut être un élastomère thermoplastique (TPE), par exemple un élastomère thermoplastique styrénique (TPS) tel que le polystyrène-b-poly(éthylène-butylène)-b-polystyrène (SEBS). Ce joint d'étanchéité 313 permet d'assurer l'étanchéité des volets 3 entre eux et avec le cadre support 5 lorsque lesdits volets sont en position d'obturation. Le joint d'étanchéité 313 peut être collé sur l'arrête du corps de volet 31 ou bien il peut être réalisé par extrusion simultanée avec la peau externe 310 et la ou les entretoises 311, il s'agit alors d'une coextrusion.

Le volet selon l'invention comprend un corps avec une peau externe, la peau externe comprenant un profilé creux, et deux embouts agencés aux extrémités du corps de volet, chaque embout étant agencé pour boucher uniquement un seul profilé creux correspondant.

Selon un aspect de l'invention, les embouts sont de forme différente.

Selon un autre aspect de l'invention, le corps de volet comporte au moins une entretoise reliant deux portions opposées de peau externe.

Selon un autre aspect de l'invention, au moins un embout comporte un doigt s'étendant selon l'axe de pivotement, apte à coopérer avec un palier porté par un cadre support.

La figure 5 montre un diagramme des étapes du procédé de fabrication d'un volet 3. Ledit procédé de fabrication comporte les étapes suivante :
- une première étape 101 d'extrusion d'un profilé creux dans une première matière, ledit profilé creux ayant une section transversale. Lors de cette première étape 101, au moins une entretoise 311 peut être formée dans le creux dudit profilé,
- une deuxième étape 103 de découpe du profilé creux à une longueur L prédéterminée de sorte à former un corps de volet 31,
- et une troisième étape 105 de mise en place d'embouts 30 aux extrémités du corps de volet 31.

Selon un premier mode de réalisation, ledit procédé de fabrication peut comporter une étape supplémentaire 107 de mise en place d'un joint d'étanchéité 313 sur au moins une des arêtes 312 du corps de volet 31. Ladite étape supplémentaire 107 est réalisée après la première étape 101 d'extrusion, par exemple juste après cette dernière, ou après la deuxième étape 103 ou bien même après la troisième étape 105. Le joint d'étanchéité 313 peut par exemple être collé sur l'arête 312 du corps de volet 31.

Selon un deuxième mode de réalisation, la première étape 101 d'extrusion est une coextrusion entre la première matière, destinée à former le profilé creux et la deuxième matière destinée à former le joint d'étanchéité 313 sur au moins une des arêtes 312 du profilé creux.

Le fait que le profilé creux donnant le corps de volet 31 soit réalisé par extrusion permet de réaliser des peaux externes 311 plus fines que lors d'un procédé de fabrication par moulage. Les peaux externes 310 étant plus fines, le volet 3 sera alors plus léger mais il conservera sa rigidité notamment du fait de la présence des entretoises 311, mais également de sa forme sensiblement ovale.

Avec un polymère thermoplastique comme première matière, il est ainsi possible de réaliser des peaux externes 310 ayant une épaisseur comprise entre 0,5 et 1 mm, notamment entre 0,7 et 0,9 mm.

La première étape 101 d'extrusion permet également de réaliser les peaux externes 310 dans une première matière métallique. Lorsque ladite première matière est métallique, il est ainsi possible de réaliser des peaux externes 310 ayant une épaisseur comprise entre 0,1 et 0,5 mm, notamment entre 0,2 et 0,3 mm.

De plus, du fait que la première étape 101 soit une étape d'extrusion, ledit procédé de fabrication est plus économique et flexible que par moulage. En effet, si l'on désire changer la longueur des volets 3, il n'est pas nécessaire de changer un moule, il suffit simplement de modifier la longueur de découpe du profilé creux. Et si l'on désire changer la structure du corps de volet 31, que ce soit au niveau de sa forme, de sa largeur 1 ou du nombre d'entretoises 311, il suffit de changer la filière de l'extrudeuse ce qui est bien moins onéreux qu'un moule complet.

Ainsi, on voit bien que le procédé de fabrication selon l'invention permet l'obtention de volets 3 plus légers et rigides, ledit procédé de fabrication étant économique et flexible.

## Revendications

1. Volet de dispositif d'obturation d'une entrée d'air comprenant un corps de volet (31) avec une peau externe (310), ladite peau externe (310) comprenant un profilé creux, et un embout (30) agencé à chaque extrémité du corps de volet (31), chaque embout (30) étant agencé pour boucher uniquement un seul profilé creux correspondant, **caractérisé en ce que** le corps de volet (31) comporte au moins une entretoise (311) reliant deux portions (310a,310b) opposées de la peau externe (310) et venant de matière avec la peau externe (310).

2. Volet de dispositif d'obturation selon la revendication 1, dans lequel les embouts (30) agencés aux deux extrémités du corps de volet (31) sont de forme différente.

3. Volet de dispositif d'obturation selon l'une des revendications précédentes, dans lequel au moins un embout (30) comporte un doigt (301) s'étendant selon l'axe de pivotement (A) du volet, apte à coopérer avec un palier porté par un cadre support.

4. Volet de dispositif d'obturation selon l'une des revendications précédentes, **caractérisé en ce que** le profilé creux a une section transversale de profil sensiblement ovale.

5. Volet de dispositif d'obturation selon l'une des revendications 1 à 4, **caractérisé en ce que** la première matière est une matière métallique.

6. Volet de dispositif d'obturation selon la revendication précédente, **caractérisé en ce que** l'épaisseur de la peau externe (310) du corps de volet (31) est comprise entre 0,1 et 0,5 mm, de préférence entre 0,2 et 0,3 mm.

7. Volet de dispositif d'obturation selon l'une des revendications 1 à 4, **caractérisé en ce que** la première matière est un polymère thermoplastique.

8. Volet de dispositif d'obturation selon la revendication précédente, **caractérisé en ce que** l'épaisseur de la peau externe (310) du corps de volet (3) est comprise entre 0,5 et 1 mm, de préférence entre 0,7 et 0,9 mm.

9. Dispositif d'obturation d'entrée d'air pour face avant de véhicule automobile, **caractérisé en ce qu'**il comprend au moins un volet selon l'une des revendications 1 à 8.

## Patentansprüche

1. Klappe einer Vorrichtung zum Verschließen eines Lufteintritts umfassend einen Klappenkörper (31) mit einer Außenhaut (310), wobei die Außenhaut (310) ein Hohlprofil umfasst, und einem Endstück (30), das an jedem Ende des Klappenkörpers (31) angeordnet ist, wobei jedes Endstück (30) angeordnet ist, nur ein einzelnes entsprechendes Hohlprofil zu verschließen, **dadurch gekennzeichnet, dass** der Klappenkörper (31) mindestens einen Abstandshalter (311) aufweist, der zwei gegenüberliegende Teilbereiche (310a, 310b) der Außenhaut (310) verbindet und mit der Außenhaut (310) einstückig ausgebildet ist.

2. Verschlussvorrichtungsklappe nach Anspruch 1, wobei die Endstücke (30), die an beiden Enden des Klappenkörpers (31) angeordnet sind, unterschiedlicher Form sind.

3. Verschlussvorrichtungsklappe nach einem der vorhergehenden Ansprüche, wobei mindestens ein Endstück (30) einen Finger (301) aufweist, der sich entlang der Schwenkachse (A) der Klappe erstreckt, der geeignet ist, mit einem Lager zusammenzuwirken, das von einem Halterahmen getragen wird.

4. Verschlussvorrichtungsklappe nach einem der vorhergehenden Ansprüche, **dadurch gekennzeichnet, dass** das Hohlprofil einen Querschnitt mit im Wesentlichen ovalem Profil aufweist.

5. Verschlussvorrichtungsklappe nach einem der Ansprüche 1 bis 4, **dadurch gekennzeichnet, dass** das erste Material ein Metallmaterial ist.

6. Verschlussvorrichtungsklappe nach dem vorhergehenden Anspruch, **dadurch gekennzeichnet, dass** die Dicke der Außenhaut (310) des Klappenkörpers (31) zwischen 0,1 und 0,5 mm, vorzugsweise zwischen 0,2 et 0,3 mm beträgt.

7. Verschlussvorrichtungsklappe nach einem der Ansprüche 1 bis 4, **dadurch gekennzeichnet, dass** das erste Material ein thermoplastisches Polymer ist.

8. Verschlussvorrichtungsklappe nach dem vorhergehenden Anspruch, **dadurch gekennzeichnet, dass** die Dicke der Außenhaut (310) des Klappenkörpers (3) zwischen 0,5 und 1 mm, vorzugsweise zwischen 0,7 et 0,9 mm beträgt.

9. Lufteintritt-Verschlussvorrichtung für Kraftfahrzeugvorderseite, **dadurch gekennzeichnet, dass** sie mindestens eine Klappe nach einem der Ansprüche 1 bis 8 umfasst.

## Claims

1. Flap of a device for closing an air intake including a flap body (31) with an outer skin (310), said outer skin (310) comprising a hollow profile section, and one end piece (30) arranged at each end of the flap body (31), each end piece (30) being arranged to stopper only one corresponding hollow profile section, **characterized in that** the flap body (31) has at least one spacer (311) linking two opposing portions (310a, 310b) of the outer skin (310) and integral with the outer skin (310).

2. Closure device flap according to Claim 1, wherein the end pieces (30) arranged at the two ends of the flap body (31) are of different shapes.

3. Closure device flap according to either of the preceding claims, wherein at least one end piece (30) has a pin (301) extending along the pivot axis (A) of the flap, that is designed to cooperate with a bearing carried by a support frame.

4. Closure device flap according to one of the preceding claims, **characterized in that** the hollow profile section has a cross section with a substantially oval profile.

5. Closure device flap according to one of Claims 1 to 4, **characterized in that** the first material is a metal material.

6. Closure device flap according to the preceding claim, **characterized in that** the thickness of the outer skin (310) of the flap body (31) is between 0.1 and 0.5 mm, preferably between 0.2 and 0.3 mm.

7. Closure device flap according to one of Claims 1 to 4, **characterized in that** the first material is a thermoplastic polymer.

8. Closure device flap according to the preceding claim, **characterized in that** the thickness of the outer skin (310) of the flap body (3) is between 0.5 and 1 mm, preferably between 0.7 and 0.9 mm.

9. Air intake closure device for a front face of a motor vehicle, **characterized in that** it comprises at least one flap according to one of Claims 1 to 8 .
